# EUROPEAN PATENT SPECIFICATION

(11) **EP 2 958 778 B1**
(45) Date of publication and mention of the grant of the patent: **18.12.2019**
(21) Application number: 13875941.0
(22) Date of filing: 22.02.2013
(51) Int. Cl.: B60T 3/00, B60P 3/077

(54) **FOLDABLE WHEEL CHOCK**
ZUSAMMENKLAPPBARER RADUNTERLEGKEIL
CALE DE ROUE PLIABLE

(43) Date of publication of application: 30.12.2015
(73) Proprietor: Volvo Truck Corporation, 405 08 Göteborg (SE)
(72) Inventor: ANDERSSON, Niklas, S-433 49 Partille (SE); ADLERSON, Hans, S-436 39 Askim (SE)
(74) Representative: Kransell & Wennborg KB
(86) International application number: PCT/SE2013/000026
(87) International publication number: WO 2014/129940

(56) References cited:
- EP-A1- 0 328 513
- WO-A1-2004/002795
- CN-U- 202 200 965
- CN-Y- 2 259 332
- DE-A1- 3 027 260
- DE-B- 1 002 642
- DE-U1- 8 903 369
- DE-U1- 9 407 118
- FR-A- 1 042 482
- FR-A1- 2 240 128
- GB-A- 286 002
- GB-A- 1 538 706
- GB-A- 2 178 121
- US-A- 2 723 005
- US-A- 2 903 094
- US-A- 3 871 492
- US-A- 3 973 651
- US-A1- 2005 077 121

## Description

### TECHNICAL FIELD

The present invention relates to a foldable wheel chock for braking a stationary vehicle by preventing rolling, wherein the wheel chock is placed at the wheel of the vehicle. The invention also relates to a stack of wheel chocks consisting of said foldable wheel chocks, for the purpose of storing the wheel chocks on a vehicle.

### BACKGROUND OF THE INVENTION

It is common knowledge within the field that wheel chocks are useful for preventing or making it more difficult for a vehicle, such as a truck, to start moving unintentionally when parked on a small slope or hill. When used, the wheel chocks are usually moved from a storage space on the vehicle to a suitable position at the wheels. The wheel chocks should be storable on the vehicle during travel to easily be lifted off and used as needed when the vehicle is parked.

The wheel chocks can be made in one piece, or be of the type that is unfolded during use and folded together during transport.

The available wheel chocks are heavy to move, which makes use awkward. Since they are made of steel, normal use will cause rust problems. Furthermore, they are difficult to fasten to brackets to make them possible to take along during travel when the wheel chocks are not actively used for braking the wheels on a vehicle. There are several alternatives for attaching the wheel chocks during travel, such as e.g. with straps, but none of them have proven to be faultless in the sense that they should be easily releasable when parking, at the same time as they should be safely and thoroughly secured during the trip. The lack of space in modern vehicles means that the wheel chocks should occupy little space, e.g. by being foldable. They are usually loaded onto the vehicle, anchored to brackets and secured by means of straps. These straps are in contact with the wheel chocks and, due to the large forces arising when the chocks are swaying during travel, the straps wear down with time, which constitutes a safety hazard.

Wheel chocks for vehicles are designed according to different principles. One variant is made in one piece having a shape which is suitable to be placed behind a vehicle wheel. This type of wheel chock is relatively bulky during storage. Another variant is foldable. It is unfolded before being placed at the tire and is folded together when placed on the vehicle so that it occupies little space. Foldable wheel chocks are generally made with hinged leg members. A third type of wheel chock is made in several separate pieces, which are joined together when placed at the tire and are taken apart when it is to be transported.

US 3 353 633 discloses a foldable chock device for wheels comprising a bottom plate, two leg members and means for connecting the leg members pivotally to the bottom plate. Each of the leg members can be placed extending diagonally upward in opposite directions when in position for use and connect to each other, so that the chock assumes the shape of a triangle. The chock is adapted to receive load from the wheel mainly on one of the leg members and the other leg member supports it. The chock is designed with holes, which are positioned in a straight line when the chock is folded together to enable attachment.

EP 0 622 281 discloses a wheel chock having a plane bottom surface and a curved contact surface against the wheel when in position for use. The wheel chock consists of a lower block contacting the ground and an upper block contacting the wheel. The sides where the blocks contact each other are equally large and are in engagement with each other in the position for use. During storage, the lower block is turned 180 degrees and can then be fitted into engagement with the upper one so that a relatively flat outer shape is achieved. A screw can secure the chock device to a support surface.

The chocks according to these two documents exhibit different solutions. During travel, the wheel chock in US 3 353 633 is secured, after being folded together, through a hole passing through the three layers consisting of the two leg members and the bottom plate. In EP 0 622 281, the wheel chock is constituted by two blocks which are secured together by a screw, which simultaneously secures the device to the vehicle.

According to a further known wheel chocks, US 3,973,651 describes a chock for a vehicle wheel comprising a first plate, having a series of swayed down peripheral portions of a series of holes, to grip a roadway, a second, flexible, plate welded at one end to said first plate, and a pin engageable in a hole at the other end of each plate, to deform the flexible plate to a curved shape, which conforms to the shape of a vehicle wheel. FR 2 240 128 describes a chock comprising a base consisting of a rectangular plate and a flexible strip. DE 10 02 642 also relates to a folding chock for vehicles, which comprises a base plate and levers that are rotatably mounted. DE 94 07 118 relates to a wheel chock for passenger cars, which has an essentially flat ground surface and a curved tyre contact surface. In order to obtain a low-cost non-skid wheel chock, which can be conveniently carried and handled, DE 94 07 118 proposes, that the wheel chock be divided into a lower chock containing the ground surface and an upper chock containing the tyre contact surface. DE 89 03 369 relates to a wheel support for road vehicles. The wheel support consists of a kit comprising a number of generally flat elements which can be assembled into a stack.

Normally, wheel chocks are divisible or foldable with one configuration during use and another one during storage. The wheel chocks can be made of plastic or steel, and can be secured during storage.

Although the previously known wheel chocks function well for braking a stationary vehicle, they still have shortcomings when they are to be transported and stored. It is therefore an object of the invention to provide a wheel chock having an improved function with respect to storage and transport.

### DISCLOSURE OF THE INVENTION

In accordance with the invention, a foldable wheel chock having an improved attachment means, and a stack of wheel chocks consisting of said foldable wheel chock, are provided. In the following description, braking means that a stationary vehicle is prevented from starting to roll, for example on a road with a slight slope.

The foldable wheel chock for braking a stationary vehicle comprises an upper and a lower leg member. The leg members comprise an inner and an outer surface with longitudinal side edges and transverse, inner and outer end edges. The leg members are pivotally mounted to each other at the inner end edges of the leg members and with the inner surfaces of the leg members facing toward each other while a flexible receiving means is fastened between the outer, transverse end edges of the lower and the upper leg member. The wheel chock can assume a configuration for use, in which the leg members are angled relative to each other with the receiving means extended between the leg members. The wheel chock can also assume a transport configuration with a substantially planar shape, in which said leg members are disposed substantially in parallel with each other, wherein the wheel chock comprises at least one attachment means comprising two members. A first member is adapted for attaching the outer surface of said lower leg member to a first external surface, and a second member is adapted for attaching the outer surface of the upper leg member to a second external surface. The first and the second attachment member thereby constitute complementary attachment means.

A wheel chock usually comprises two attachment means in order to ensure the stability of the wheel chock. Thereby, the attachment means can be disposed next to each other in the longitudinal direction of the leg members.

Through this design, the wheel chock can assume two positions: a first configuration for use, where the wheel chock is unfolded to be capable of receiving a vehicle wheel; and a transport configuration, in which the wheel chock is folded together with a substantially planar shape. A male member of an attachment means is attached either to a female member on the vehicle or to the female member of another wheel chock, and vice versa. Since a female member and a male member are integrated with each wheel chock, they occupy little space. For the sake of clarity, the attachment means are designed such that, even if they are complementary, it is not possible, for example, to put together a female member of a wheel chock with the complementary male member on the same wheel chock, but the female member has to be put together with a male member on another wheel chock or on an external receiving surface. Accordingly, this type of attachment means are space saving, which is an advantage since the chocks thereby get a more compact and manageable shape. A wheel chock with a substantially planar shape is also easier to lift and carry than a wheel chock with a more bulky outer shape. The wheel chocks are usually stored on the vehicle, but it can also be desirable to be able to stack them and to be able to store them in a space-efficient way, for example in a workshop.

In the transport configuration, where the leg members are substantially in parallel with each other, the flexible receiving means is folded and placed between the two leg members. Accordingly, in this position, the receiving means is double-folded between the leg members. The inner surfaces of the leg members can be designed such that a space for the receiving means is formed between the leg members, but can also be made for providing space for the receiving means without any recess, since the receiving means is not bulky but can be accommodated flat, double-folded between the leg members. The flexible receiving means can be designed as a strap or a belt with a long extension in the longitudinal direction, a relatively small width in the transverse direction and being thin in the thickness direction. Alternatively, the receiving means can comprise one or several strips of flexible material, for example plastic, rubber, reinforced rubber, textile, leather, etc. Other possible receiving means can be in the form of nets, one or several chains, or strips with bending notches, so-called articulated strips. Also combinations of two or more such above-mentioned elements are possible as receiving means.

Several different possible forms of receiving means gives the wheel chock flexibility to suit different requirements.

Another purpose of the invention is that the wheel chock can be attached to the associated vehicle, which is enabled by attachment means both in vehicle and wheel chocks, and it is thereby possible to attach wheel chocks to each other and to simultaneously anchor them in a wear-protected manner to the vehicle in question.

The attachment means can comprise a locking knob, which is suitably an integrated part of the chock. Thereby, the knob replaces both attachment bracket as well as straps for storage of chocks in the present trucks. To ensure that the attachment means with locking knobs will function in an optimal way, it is suitable to dispose at least two locking knobs on each wheel chock. If the wheel chock has only one locking knob, there is a risk that it starts rotating about this single knob. With at least two locking knobs, rotation is prevented and this can therefore be regarded as a safer solution.

The complementary shape of the attachment means makes them even more space-saving. This is advantageous, since several chocks can be attached to each other without the resulting stack becoming unnecessarily bulky. The locking knob can be equipped with a thread, but can also function with a bayonet coupling or another equivalent solution such as, for example, a snap lock.

In configuration for use, the leg members can be set up with one leg member at the ground level, and the other pivotally mounted leg member can be set at a predetermined angle relative to the first leg member. The ground, or the ground level, can be horizontal, or a hill, such as, for example, an upward or downward slope with a slight or steep inclination.

In configuration for use, the wheel chock meets the international standard regulating that the measures of wheel chock conform to predetermined values for the classifications in the standard. This means that the length of the wheel chock, which according to the invention is defined as the length of the lower leg member, is predetermined, as well as that the height of the wheel chock is predefined and assumes a fixed size. Furthermore, the wheel chock should have a specified radius against the tire. These limitations mean that the angle between the leg members becomes predefined. In order to achieve the correct radius, the receiving means for the wheel is suitably made of a material with elastic properties, such as a woven fibre fabric, etc.

Large and heavy vehicles usually have large wheels and therefore use relatively large wheel chocks, which is also in accordance with the standard. The predefined angle is determined by the size and curvature of the wheel. A large wheel with a larger radius means that the receiving means will have a more straight shape in comparison to a small wheel chock for smaller wheels and with a small radius where the receiving means assume a more curved shape. The wheel chock can also be designed such that the lower leg member is chamfered on the top side where the receiving means is/are attached. In this variant, the curvature of the receiving means follows the curvature of the leg member in a natural way matching the tire of the vehicle. Accordingly, the angle between the leg members should be such that the included receiving means will have a curvature adapted to the wheel that the wheel chock is to brake. This angle can be adapted according to wheel size and can thus vary when braking wheels of different sizes. One advantage with pivotally adjusting the leg members according to an optimal angle is that the braking of the vehicle becomes as efficient as possible. Furthermore, the risk that the wheel chock slides away when the ground surface provides little friction, e.g. in case of a hill partially covered by ice, is reduced if wheel and wheel chock have good mutual contact. In that case, the wheel chock can to some extent be wedged underneath the tire and be pressed down against the ground to improve the friction between chock and ground.

To further increase the friction between the ground and the wheel chock, the outer surface of the lower leg member on the wheel chock can be equipped with friction-increasing means, such as, for example, knobs, spikes, grooves or the like. Friction-increasing means, together with the weight from the wheels, provide a good road contact, which contributes to an increased braking action.

One advantage of the wheel chock according to the invention is that the receiving means for receiving the tire of the vehicle is flexible, and thus can conform to the rounded shape of the tire, which means that the pressure per unit of area on the receiving means is optimized. The receiving means is also adaptable to tires of different sizes.

The wheel chock can also be designed such that it has integrated adjustment means, for example pawls, allowing the leg member to stop in a predefined position. One advantage with this embodiment is that the leg members are easily moved into the correct position relative to each other, and are subsequently not displaced from each other for example by the weight of the vehicle, or the lack of friction of the ground surface, or any other unforeseeable force acting on the wheel chock.

The angle between the leg members is preferably selected in relation to the length of the receiving means, so that the intermediate receiving means will have an advantageous shape for receiving a vehicle tire. The fact that the leg members are pivotally mounted to each other allows setting of different angles between the leg members to receive tires of different sizes in configuration for use.

The receiving means, connecting the opposite, transverse end edges of the leg members, can be made of, for example, plastic, rubber, reinforced rubber, textile, leather, etc. It is foldable such that, when in transport configuration, it is bent in between the inner surfaces of the leg members. The wheel chock itself can be made of any suitable material capable of withstanding the expected load, such as plastic, composite or metal.

The cooperating attachment means can be constituted by a male member and a female member, wherein the male member can suitably be anchored to an external part and the female member can constitute an attachment for another wheel chock.

Thereby, the male member is placed at the bottom and the female member at the top of the wheel chock, which means that the male member is adapted to be attached to an external part. Of course, the opposite may also be the case, i.e. that the female member is placed at the bottom and thereby is adapted to be anchored to an external part, such as to the vehicle.

The complementary attachment means are a flexible and space-saving solution that offers simplicity in attaching wheel chocks to a support surface and/or to each other without having to use any separate securing means such as straps or the like. The wheel chocks included in a stack of two or more wheel chocks can have only one cooperating attachment means. Preferably, each attachment means has a locking device for locking in a position where it is connected to another attachment means. This prevents a wheel chock at the bottom from rotating together with a wheel chock at the top. In cases where the chock has two or more attachment means, rotation is prevented in that the attachments lock the chock in a position. In these cases, it is ensured that the attachment means are thoroughly attached to the support surface so that the risk of rotation is minimized. There might be a risk of rotation if one out of two attachment means is not well anchored. Rotation can be prevented for example by shape-locking of the wheel chocks.

To facilitate the handling of the wheel chock, it is suitably made of a lightweight material such as plastic, composite, or the like. This also results in a lower weight during transport on the vehicle. One problem with previously used foldable wheel chocks of steel is that they rust and jam, especially in humid climates. Also for this reason, it is very advantageous to make the wheel chock according to the invention from a corrosion resistant plastic material or the like.

Another advantage of the wheel chock according to the invention is that no straps are needed for securing the chocks when they are to be transported on a vehicle. Since straps are exposed to heavy wear during such use and run the risk of being worn down, the attachment device according to the invention means that it is possible to substantially increase the safety during transport of the wheel chock.

The locking devices, however, have to be designed to withstand the loads encountered and need to have a size and rigidity corresponding to the weight of the wheel chocks and the forces imposed on the wheel chocks when the truck is set in motion. Additional forces imposed, such as when the truck is driving on a bumpy road or in an uphill slope, also have to be taken into consideration when determining the dimensions of the locking knobs.

For a truck with two wheel axles, it may be sufficient with only one wheel chock for braking the truck. A larger truck can have three or more axles and then the need for wheel chocks may be two or more per truck. There may also be a need for an additional wheel chock for braking an associated connected trailer.

The attachment means can consist of a threaded screw with an internal and external thread, or a bayonet lock. A threaded screw with internal and external thread can be compared to a hollow cylinder in shape in which a threaded screw can be secured. To enable the attachment means to be easily unscrewed, they can be provided with two engagement holes, alternatively a "knob", or a folding handle. A folding handle can be attached to the top side of the attachment device and be unfolded and rotated to release the wheel chock from the support surface.

The wheel chocks can be attached for storage in any suitable position on the vehicle. A suitable position may be one where there is sufficient space and where they are easily accessible, such as on the battery box of the vehicle or on a fuel tank.

Furthermore, the wheel chocks preferably have some kind of handle, for instance placed cross-wise between two attachment means. A handle makes things easier when unfolding the chock for use and also when the chock is to be moved to and from the tires of the vehicle.

Another aspect of the present invention is that a wheel chock can be attached to another foldable wheel chock for the formation of a stack of wheel chocks. More specifically, a stack of wheel chocks is obtained in that a first and a second wheel chock are mutually connected by means of said cooperating attachment means.

More in detail, this variant of the invention is constituted by a foldable wheel chock of the above-mentioned kind, wherein the cooperating attachment means are constituted by a male member and a female member, wherein the male member is adapted to be anchored to an external part and the female member constitutes an anchoring means for another wheel chock.

Accordingly, the upper external surface of the previously described wheel chock can be attached to another wheel chock for the formation of a stack of wheel chocks. Another advantage of the proposed wheel chock is that it is equipped with attachment means to enable stacking. A stack of wheel chocks provides packing benefits and is, in addition, an optimal way to get the wheel chocks accessible. Suitably, the stack of wheel chocks is placed in an ergonomically advantageous position on the vehicle, for the purpose of being easily reached for positioning at the wheels.

The storage of wheel chocks may also take place in workshops, where the possibility of a stable stacking of chocks can be an advantage. A stack of wheel chocks provides a common place for available wheel chocks, which thus easily can be moved into position at the wheels of a vehicle that is to be repaired.

The lower leg member of the lowermost wheel chock in the stack of wheel chocks is attached to a vehicle.

The ability to attach the stack of wheel chocks to the vehicle during transport provides the advantage that several wheel chocks can be transported easily and space-savingly on the vehicle, and that the wheel chocks can be used as needed, e.g. in an uphill or downhill slope of the road.

The outer surface of the upper leg member of the lowermost first wheel chock is attached to the outer surface of the lower leg member of the upper second wheel chock.

The attachment of the wheel chocks to each other in a rationally appropriate manner provides a compact and coherent stack of wheel chocks and provides space-saving advantages.

The attachment means can be constituted by a screw or snap function or the like, which are appropriate in this type of device.

### BRIEF DESCRIPTION OF THE FIGURES

With reference to accompanying drawings, a closer description of exemplary embodiments of the invention will follow below.

In the drawings,
Fig. 1 is a sectional view of a foldable wheel chock in configuration for use,
Fig. 2 is a sectional view of a foldable wheel chock in transport configuration,
Fig. 3 is a sectional view of a stack of wheel chocks consisting of two foldable wheel chocks.

### DETAILED DESCRIPTION OF PREFERRED EMBODIMENTS OF THE INVENTION

In the figures, identical or similar parts are indicated with the same reference numerals. The figures are merely schematic representations and are not intended to show specific further developments of the invention. The figures are only intended to show typical embodiments of the invention and should therefore not be regarded as limiting to the invention.

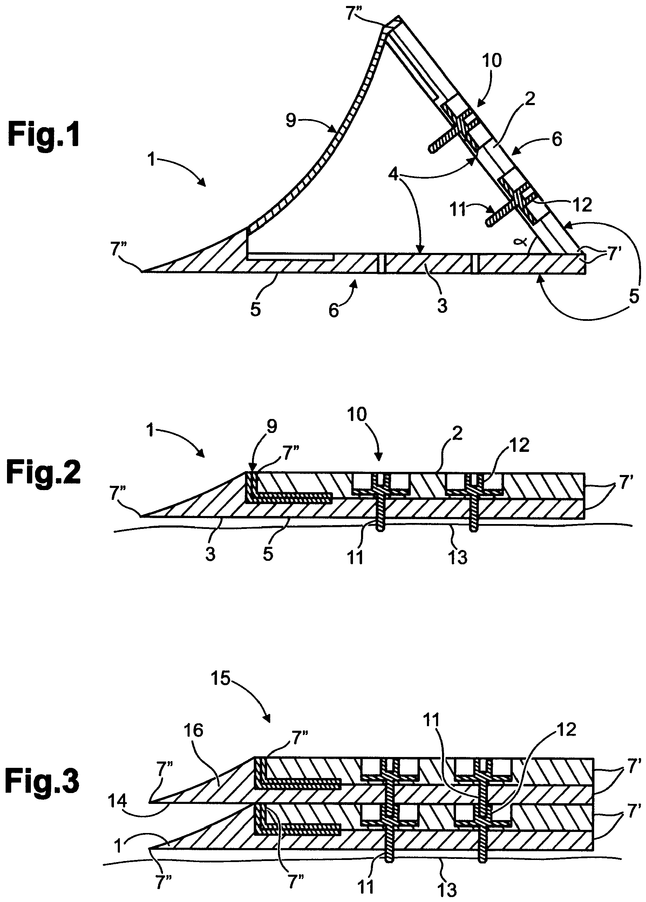

Figure 1 illustrates a foldable wheel chock 1 for braking a stationary vehicle. The wheel chock comprises an upper leg member 2 and a lower leg member 3, which leg members 2, 3 comprise an inner surface 4 and an outer surface 5 with longitudinal side edges 6 and transverse end edges 7', 7". The leg members 2, 3 are mounted pivotally to each other at one of the end edges 7' of the leg members 2, 3 and with the inner surfaces 4 of the leg members 2, 3 facing toward each other while a receiving surface 9 in the form of a flexible receiving means 9 is fastened between the opposite, transverse end edges 7" of the lower leg member 3 and the upper leg member 2.

Figure 1 shows that the wheel chock 1 can assume a configuration for use defined by the leg members 2, 3 being angled relative to each other with the receiving means 9 extending arcuately between the leg members 2, 3.

In the shown wheel chock, the receiving means is constituted by a strap, but can be constituted by other flexible means, such as, for example a belt, a net, a chain, or a combination of two or several such elements. It is necessary however, that the receiving means is flexible longitudinally, to enable it to be bent and to provide a balanced curved receiving surface for the tire with a suitable radius.

One advantage of the proposed wheel chock is that it is easy to lift and place at the wheel. The receiving means and leg members of the wheel chock are adapted to withstand the weight of a vehicle. At the same time, the materials in the wheel chock are adapted such that the wheel chock has a weight making it easy to handle and carry.

The shown wheel chock has been adapted to have a suitable shape in that a shoulder on the lower leg member allows a space for the receiving means 9 during transport. Since the receiving means 9 is folded in between the leg members of the chock when the wheel chock 1 is in the folded position shown in Figure 2, the receiving means 9 is protected from external influence during transport and storage. In Figure 1, the lower leg member 3 is shown with a rounded shape in line with the shape of the receiving surface 9 to facilitate the reception of a vehicle wheel. Such a design of the edge of the lower leg member 3 is advantageous, but not necessary, for the invention.

Figure 2 shows that the wheel chock can assume a transport configuration with a substantially planar shape defined by said leg members 2, 3 being disposed substantially in parallel with each other. The wheel chock comprises at least one cooperating attachment means 10 comprising two members. The first member 11 is adapted for attaching the outer surface 5 of said lower leg member 3 to a first external surface 13, and the second member 12 is adapted for attaching the outer surface 5 of the upper leg member 2 to a second external surface 14 (see Fig. 3). The first attachment member 11 and the second attachment member 12 constitute complementary attachment means 10.

One advantage of the proposed transport configuration for the wheel chock is that the wheel chock can be attached to a vehicle during transport and that it is compact and flexible in its design. The fact that the wheel chock owing to its foldability can assume two different positions makes it suited both for transport and for braking at a wheel.

In the configuration for use of the wheel chock, as shown in Figure 1, the leg members 2, 3 are disposed with one leg member 3 along at the ground level. The second pivotally mounted leg member 2 is disposed at a predefined angle α relative to the first leg member 3.

Before using the wheel chock, the leg members 2, 3 are pulled away from each other to a predetermined position for the vehicle in question, so that a suitable angle is formed between the leg members. Thereby, the wheel chock has been brought from the transport configuration to the configuration for use. When the wheel chock is in the configuration for use, it can be placed at a wheel of the vehicle such that the vehicle wheel contacts the flexible receiving means 9, which can then conform to the shape of the wheel.

Furthermore, one aspect of the invention is that the cooperating attachment means 10 are constituted by a male member 11 and a female member 12. Figure 3 illustrates how the male member 11 on a first wheel chock 1 is anchored to an external part 13, and the female member 12 on the first wheel chock 1 can be used for anchoring another wheel chock 16 to the first wheel chock, as is shown in Figure 3. The external part 13 can be a planar surface on the vehicle, e.g. the battery box, to which the wheel chock can be attached. The fact that the wheel chock has a specific storage space on the vehicle means both that there is a specially adapted space with means for attaching a wheel chock to the vehicle and that the wheel chock easily can be found by different drivers. The attachment means can be equipped with e.g. a handle, allowing the wheel chock to be released and attached as needed.

In Figure 3, the male member and the female member are disposed such that the male member is at the bottom and the female member is at the top of the wheel chock, but it can also be vice versa, that is to say that the female member is placed in the lower position and the male member in the upper one.

Furthermore, in Figure 3, the external part 13 lies at the bottom and represents, for example, an upwardly facing surface on a vehicle. Alternatively, the external part 13 can be located above the wheel chock, which then, for example, can be attached to a roof or be suspended from a downwardly facing surface on a vehicle.

Also the external surface 14 can be constituted by a wheel chock, but can also, for example, be the inside of a roof.

This aspect of the invention allows the wheel chocks to be stacked, wherein a stack 15 of wheel chocks consisting of a first foldable wheel chock 1 attached to a second foldable wheel chock 16 is formed. In certain applications where more than two wheel chocks are stacked, the stack can consist of three, four or more wheel chocks. This may be the case in vehicles with several trailers, or during storage in a vehicle workshop.

The outer surface 5 of the lower leg member 3 of the first wheel chock 1 of the stack of wheel chocks is thereby adapted to be attached to a vehicle.

In the stack 15 of wheel chocks, the outer surface 5 of the upper leg member 2 of the first wheel chock 1 can be attached to the outer surface 5 of the lower leg member of the second wheel chock 16.

These variants of the invention specify that the wheel chocks are attached to each other in a specific order and in a specific manner. In some cases, it might be possible to release both wheel chocks in one piece, but usually the chocks are released successively from the vehicle. Also when attaching them to the vehicle, this is suitably done by attaching each wheel chock successively one after another.

The proposed foldable wheel chock and associated stack of wheel chocks is primarily suitable for heavier vehicles in which also the wheel chocks are heavy and bulky. However, the wheel chock is also useful in private cars and other vehicles where it may be suitable to secure the wheel chocks during travel.

## Claims

1. A foldable wheel chock (1) for braking a stationary vehicle, which is constituted by an upper (2) and a lower (3) leg member, said leg members (2, 3) comprising an inner (4) and an outer (5) surface with longitudinal side edges (6) and transverse, inner and outer end edges (7', 7"), said leg members (2, 3) being pivotally mounted to each other at the inner end edges (7') of the leg members (2, 3) and with the inner surfaces (4) of the leg members (2, 3) facing toward each other while a flexible receiving means (9) is fastened between the outer, transverse end edges (7") of the lower leg member (3) and the upper leg member (2), wherein said wheel chock (1) can assume a configuration for use, in which said leg members (2, 3) are angled relative to each other with said receiving means (9) extended between the leg members (2, 3), and a transport configuration with a substantially planar shape, in which said leg members (2, 3) are disposed substantially in parallel with each other,
**characterized in that** the wheel chock (1) comprises at least one attachment means (10) comprising two members, wherein a first member (11) is adapted for attaching the outer surface (5) of said lower leg member (3) to a first external surface (13), and a second member (12) is adapted for attaching the outer surface (5) of the upper leg member (2) to a second external surface (14), and wherein the first (11) and the second (12) attachment member constitute complementary attachment means (10), the attachment member (10) being arranged on the upper leg member (2), wherein the first member (11) of the attachment member (10) is arranged through the lower leg member (3) when the wheel chock assumes the transport configuration, and is disconnected from the lower leg member (3) when the wheel chock assumes the configuration for use.

2. The foldable wheel chock (1) according to claim 1, **characterized in that** the flexible receiving means (9) comprises one or several flexible, elongated elements, such as a belt, a strap, a net, a chain, or a combination of two or several such elements.

3. The foldable wheel chock (1) according to claim 1 or 2, **characterized in that** the leg members (2, 3), in the configuration for use, are disposed with a first leg member (3) along the ground level and that the second pivotally mounted leg member (2) is disposed at predefined angle (α) relative to the first leg member (3).

4. The foldable wheel chock (1) according to claim 1, 2 or 3, **characterized in that** the cooperating attachment means (10) are constituted by a male member (11) and a female member (12), wherein the male member (11) is adapted to be anchored to an external part (13) and the female member (12) constitutes an anchoring means for another wheel chock (16).

5. A stack (15) of wheel chocks, comprising a first and a second wheel chock according to any one of the preceding claims, wherein the first and the second wheel chock are mutually connected by means of said cooperating attachment means (10).

6. The stack of wheel chocks according to claim 5, **characterized in that** the outer surface (5) of the lower leg member (3) of said first wheel chock (1) is attached to a vehicle.

7. The stack (15) of wheel chocks according to claim 5 or 6, **characterized in that** the outer surface (5) of the upper leg member of said first wheel chock (1) is attached to the outer surface (5) of the lower leg member of said second wheel chock (16).

## Patentansprüche

1. Zusammenklappbarer Unterlegkeil (1) zur Bremsung eines stehenden Fahrzeugs, welcher durch ein oberes (2) und ein unteres (3) Schenkelelement gebildet wird, wobei die Schenkelelemente (2, 3) eine innere (4) und eine äußere (5) Fläche mit länglichen Seitenkanten (6) und transversalen inneren und äußeren Endkanten (7', 7") umfassen, wobei die Schenkelelemente (2, 3) schwenkend aneinander an den inneren Endkanten (7') der Schenkelelemente (2, 3) montiert sind und wobei die inneren Flächen (4) der Schenkelelemente (2, 3) zueinander zeigen, während ein flexibles Aufnahmemittel (9) zwischen den äußeren transversalen Endkanten (7") des unteren Schenkelelements (3) und des oberen Schenkelelements (2) befestigt ist, wobei der Unterlegkeil (1) eine Gebrauchsanordnung einnehmen kann, in der die Schenkelelemente (2, 3) im Bezug zueinander mit dem Aufnahmemittel (9), das sich zwischen den Schenkelelementen (2, 3) erstreckt, abgewinkelt sind, und eine Transportanordnung mit einer im Wesentlichen planaren Form, in der die Schenkelelemente (2, 3) im Wesentlichen parallel zueinander angeordnet sind,
**dadurch gekennzeichnet, dass** der Unterlegkeil (1) mindestens ein Befestigungsmittel (10) umfasst, das zwei Elemente umfasst, wobei ein erstes Element (11) ausgelegt ist, um die äußere Fläche (5) des unteren Schenkelelements (3) an einer ersten externen Fläche (13) zu befestigen, und ein zweites Element (12) ausgelegt ist, um die äußere Fläche (5) des oberen Schenkelelements (2) an einer zweiten externen Fläche (14) zu befestigen, und wobei das erste (11) und das zweite (12) Befestigungselement ein komplementäres Befestigungsmittel (10) bilden, wobei das Befestigungselement (10) am oberen Schenkelelement (2) angeordnet ist, wobei das erste Element (11) des Befestigungselements (10) durch das untere Schenkelelement (3) angeordnet ist, wenn der Unterlegkeil die Transportanordnung einnimmt, und von dem unteren Schenkelelement (3) getrennt ist, wenn der Unterlegkeil die Gebrauchsanordnung einnimmt.

2. Zusammenklappbarer Unterlegkeil (1) nach Anspruch 1, **dadurch gekennzeichnet, dass** das flexible Aufnahmemittel (9) ein oder mehrere flexible, längliche Bauteile umfasst, wie etwa ein Band, einen Riemen, ein Netz, eine Kette oder eine Kombination aus zwei oder mehreren solchen Bauteilen.

3. Zusammenklappbarer Unterlegkeil (1) nach Anspruch 1 oder 2, **dadurch gekennzeichnet, dass** die Schenkelelemente (2, 3) in der Gebrauchsanordnung mit einem ersten Schenkelelement (3) auf der Bodenebene angeordnet sind und dass das zweite, schwenkend montierte Schenkelelement (2) in Bezug auf das erste Schenkelelement (3) in einem vordefinierten Winkel (α) angeordnet ist.

4. Zusammenklappbarer Unterlegkeil (1) nach Anspruch 1, 2 oder 3, **dadurch gekennzeichnet, dass** das zusammenwirkende Befestigungsmittel (10) durch ein männliches Element (11) und ein weibliches Element (12) gebildet ist, wobei das männliche Element (11) ausgelegt ist, um an einem externen Teil (13) verankert zu werden, und das weibliche Element (12) ein Verankerungsmittel für einen weiteren Unterlegkeil (16) bildet.

5. Unterlegkeilstapel (15), umfassend einen ersten und einen zweiten Unterlegkeil nach einem der vorhergehenden Ansprüche, wobei der erste und der zweite Unterlegkeil mittels des zusammenwirkenden Befestigungsmittels (10) miteinander verbunden sind.

6. Unterlegkeilstapel nach Anspruch 5, **dadurch gekennzeichnet, dass** die äußere Fläche (5) des unteren Schenkelelements (3) des ersten Unterlegkeils (1) an ein Fahrzeug befestigt ist.

7. Unterlegkeilstapel (15) nach Anspruch 5 oder 6, **dadurch gekennzeichnet, dass** die äußere Fläche (5) des oberen Schenkelelements des ersten Unterlegkeils (1) an der äußeren Fläche (5) des unteren Schenkelelements des zweiten Unterlegkeils (16) befestigt ist.

## Revendications

1. Cale de roue pliable (1) pour le freinage d'un véhicule à l'arrêt, lequel est constitué d'éléments de jambe supérieur (2) et inférieur (3), lesdits éléments de jambe (2, 3) comprenant des surfaces intérieures (4) et extérieures (5) avec des bords latéraux longitudinaux (6) et des bords d'extrémité intérieurs et extérieurs (7', 7") transversaux, lesdits éléments de jambe (2, 3) étant montés de façon pivotante l'un par rapport à l'autre au niveau des bords d'extrémité intérieurs (7') des éléments de jambe (2, 3), et les surfaces intérieures (4) des éléments de jambe (2, 3) étant tournées les unes vers les autres, tandis qu'un moyen de réception flexible (9) est fixé entre les bords d'extrémité transversaux extérieurs (7") de l'élément de jambe inférieur (3) et de l'élément de jambe supérieur (2), ladite cale de roue (1) pouvant adopter une configuration d'utilisation dans laquelle lesdits éléments de jambe (2, 3) sont coudés l'un par rapport à l'autre et ledit moyen de réception (9) s'étend entre les éléments de jambe (2, 3), et une configuration de transport présentant une forme substantiellement planaire, dans laquelle lesdits éléments de jambe (2, 3) sont disposés substantiellement parallèlement l'un par rapport à l'autre,
**caractérisée en ce que** la cale de roue (1) comprend au moins un moyen de fixation (10) comprenant deux éléments, dans laquelle un premier élément (11) est adapté pour fixer la surface extérieure (5) dudit élément de jambe inférieur (3) à une première surface externe (13), et un deuxième élément (12) est adapté pour fixer la surface extérieure (5) de l'élément de jambe supérieur (2) à une deuxième surface externe (14), et dans laquelle les premier (11) et deuxième (12) éléments de fixation constituent des moyens de fixation complémentaires (10), l'élément de fixation (10) étant disposé sur l'élément de jambe supérieur (2), dans laquelle le premier élément (11) de l'élément de fixation (10) est disposé à travers l'élément de jambe inférieur (3) lorsque la cale de roue adopte la configuration de transport, et détaché de l'élément de jambe inférieur (3) lorsque la cale de roue adopte la configuration d'utilisation.

2. Cale de roue pliable (1) selon la revendication 1, **caractérisée en ce que** le moyen de réception flexible (9) comprend un ou plusieurs éléments flexibles allongés, tels qu'une courroie, une bande, un filet, une chaîne ou une combinaison de deux ou plusieurs de ces éléments.

3. Cale de roue pliable (1) selon la revendication 1 ou 2, **caractérisée en ce que** dans la configuration d'utilisation, les éléments de jambe (2, 3) sont disposés avec un premier élément de jambe (3) le long du niveau du sol, et **en ce que** le deuxième élément de jambe (2) monté de façon pivotante est disposé selon un angle prédéfini (α) par rapport au premier élément de jambe (3) .

4. Cale de roue pliable (1) selon la revendication 1, 2 ou 3, **caractérisée en ce que** les moyens de fixation complémentaires (10) sont constitués d'un élément mâle (11) et d'un élément femelle (12), l'élément mâle (11) étant adapté pour être ancré à une partie extérieure (13) et l'élément femelle (12) constituant un moyen d'ancrage pour une autre cale de roue (16).

5. Pile (15) de cales de roue, comprenant une première et une deuxième cale de roue selon l'une quelconque des revendications précédentes, dans laquelle les première et deuxième cales de roue sont reliées l'une à l'autre à l'aide des moyens de fixation complémentaires (10).

6. Pile de cales de roue selon la revendication 5, **caractérisée en ce que** la surface extérieure (5) de l'élément de jambe inférieur (3) de ladite première cale de roue (1) est fixée à un véhicule.

7. Pile (15) de cales de roue selon la revendication 5 ou 6, **caractérisée en ce que** la surface extérieure (5) de l'élément de jambe supérieur de ladite première cale de roue (1) est fixée à la surface extérieure (5) de l'élément de jambe inférieur de ladite deuxième cale de roue (16).
